(19) Europäisches Patentamt
European Patent Office
Office européen des brevets

(11)  EP 2 674 682 B1

(12)  **EUROPEAN PATENT SPECIFICATION**

(45) Date of publication and mention
of the grant of the patent:
**06.05.2020 Bulletin 2020/19**

(21) Application number: **12004471.4**

(22) Date of filing: **13.06.2012**

(51) Int Cl.:
*F24D 3/18* *(2006.01)*  *F24D 19/10* *(2006.01)*
*F24D 19/00* *(2006.01)*

(54) **Method of operating a heat pump for avoiding freezing**

Verfahren zum Betrieb einer Wärmepumpe zum Vermeiden von Gefrieren

Procédé de fonctionnement d'une pompe à chaleur pour éviter le gel

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**18.12.2013 Bulletin 2013/51**

(73) Proprietor: **Thermia AB
671 34 Arvika (SE)**

(72) Inventors:
• **Ohmark, Olav
67252 Arvika (SE)**

• **Simonsson, Per
65222 Karlstad (SE)**

(74) Representative: **Eisenführ Speiser
Patentanwälte Rechtsanwälte PartGmbB
Postfach 31 02 60
80102 München (DE)**

(56) References cited:
**JP-A- 2005 344 953    US-A1- 2003 221 436
US-A1- 2007 214 815    US-A1- 2010 108 290**

EP 2 674 682 B1

**Description**

FIELD OF THE INVENTION

The invention relates to heat pumps of the kind extracting thermal energy from a cold thermal energy source such as the ground, sea water or other external source in the environment having exchanged thermal energy with a cold heat transfer liquid to be passed to a heat pump for passing on the thermal energy.

BACKGROUND OF THE INVENTION

In heat pumps of today, the cold heat transfer liquid may be centrally distributed to a large number of buildings, each equipped with its own heat pump such as in so-called ATES (Aquifer Thermal Energy Storage) systems. The individual heat pumps do not require a brine pump, the individual heat pumps only require a device to control the flow of the cold heat transfer liquid, a so-called two way valve. The cold heat transfer liquid may be used as heat source during heating and domestic hot water (DHW) production, and the cold heat transfer liquid may also be used as heat transfer liquid for passive cooling of, e.g., buildings.

The cold heat transfer liquid may consist of water. Flow on the cold side is controlled by a valve with a fixed setting. The flow must be set to a high level in order to guarantee problem free functioning. This causes several problems:

The amount of water pumped around becomes larger than calculated, giving problems to get enough water to all installations. The energy required to pump the water becomes large, thereby reducing overall system performance. The amount of water extracted from the ATES is larger than it is dimensioned for, giving low water temperatures during heating season. A large flow during summer during passive cooling does not give high enough temperatures to recharge the ATES properly.

Because water is used, there is also a significant risk of freezing in the heat pump. If the evaporator freezes and cracks, unlimited amounts of water will be pumped from the distribution system into the building, causing large damages.

JP 2005-344953 A discloses a hybrid type geothermal heat utilization system comprising an underground heat exchanger for exchanging the heat between geothermal heat and a fluid heat medium flowing inside, and a heat medium tank connected with the underground heat exchanger for storing the heat medium. A heating means is mounted in the heat medium tank for heating the heat medium in the heat medium tank by using an external heat source. A temperature sensor for detecting a temperature of the heat medium and a controller for controlling the operation of the heating means are further mounted, and the controller controls the operation of the heating means on the basis of the temperature detected by the temperature sensor. The heating means may be composed of a hot water heat exchanger applying an electrothermal heater or the hot water as its heat source. In the latter case the heating means is controlled by fully opening or fully closing a valve arranged in the flow path of the hot water.

US 2010/0108290 A1 discloses a method and equipment for heating and cooling building zones. The equipment may comprise a modular distribution box, hot and cold HVAC fluid inlet pipes, HVAC component supply and HVAC component return pipes, and hot and cold HVAC fluid outlet pipes

SUMMARY OF THE INVENTION

It is an object of the invention to overcome the problems mentioned above.

The object is obtained by a method according to claim 1 and a heat pump according to claim 10. By providing a valve controlled based on the temperature of the cold heat transfer liquid, it is possible to eliminate the risk of freezing. Also, it is possible to minimize the consumption of water for heating and cooling. Furthermore, electrical energy consumption is minimized for one or more pumps for the cold heat transfer liquid. The fundamental function is to control the flow of cold heat transfer liquid in order to achieve minimum water usage during heating production and possible passive cooling. The heat pump should work with largest possible temperature difference on the cold side, both during heat production and during passive cooling. At the same time, care must be taken to ensure no freezing in the evaporator and proper functioning during all operating conditions of the heat pump, e.g. heat production, DHW production, passive cooling, switch between modes etc.

The adjustable flow of the cold heat transfer liquid Is achieved by using a valve, which can be controlled by a signal from a heat pump controller. The temperature of the cold heat transfer liquid at one or more selected positions on the cold side, either before, inside, or after the heat first exchanger is continuously monitored, giving information to the heat pump controller, if the valve should be adjusted. The invention must be able to overcome different challenges including:

- Controlling the two way valve during heat production, taking slow reaction time of the valve into consideration. Instabilities in the controller must be avoided.

- Implementing safety functions to ensure no freezing in the evaporator will take place. Finding suitable temperature limits on the cold heat transfer liquid.

- Handling possible problems when switching modes of operation, e.g. going from DHW production to heat production, which may be a source of difficulties.

- Controlling cold heat transfer liquid flow during passive cooling. A constant temperature on outlets of heat exchanging elements, such as radiators, is to be maintained.

Other possible features of the method according to the invention are mentioned in any of claims 2-9. Different types of signals may be provided, depending on the mode of operation of the heat pump controller of the heat pump and depending on how fast, how reliable and how often the control valve of the valve unit is to be controlled.

The control valve may be controlled by a 0-10V control signal that is designed to

    A. Prevent instability
    B. Maintain set delta temperature
    C. Prevent freezing of evaporator

**A. Stability**

Stability is maintained by controlling the two way valve in a manner reminding of proportional-integral-derivative control (PID control). Stability is maintained by controlling the valve according to the following equation:

$$But = But_{n-1} + K_p * e(t)$$

where *But* is the control signal, *But$_{n-1}$* is the previous control signal. By adding the error e(t) calculated as difference between measured and desired delta temperature, where the measured delta temperature is the difference between incoming and outgoing cold heat transfer liquid, multiplied by a constant to the previous control signal, a history function of the error and stability in the control signal is obtained.

**B. Maintaining delta temperature**

Kp is designed to match different parameters such as two way valve specifications, heat pump size, boundaries of inlet temperatures on the cold heat transfer liquid, for obtaining a stable signal to maintain appropriate temperatures according to user settings, because Kp and e(t) varies depending on three states;

    I. Normal heat/hot water production
    II. Safety mode heat/hot water production
    III. Passive cooling function.

State I

e(t) is a measure of the error between desired and current delta temperature of the cold heat transfer liquid.

State II

e(t) is a measure of the error between minimum allowed outlet temperature on the cold heat transfer liquid side and current cold heat transfer liquid temperature to prevent freezing of the evaporator. Kp is raised to increase control signal adjustment of the two way valve.

State III

e(t) is a measure of error between desired and current supply temperature on supply line. Kp is set to match desired flow of cool heat transfer liquid during cooling production.

Values are based on calculations, lab tests and verified on field test results.

State I and II are alternated during operation and switches depending on user set minimum outlet cold heat transfer liquid temperature. State III concerns passive cooling only.

**C. Preventing freezing of evaporator**

The control signal is based on the error e(t) and the constant Kp. By alternating between case I and II, thus changing input parameters to e(t) and adjusting Kp, freezing point of the cold heat transfer liquid can be avoided to be reached by the refrigerant. Because the refrigerant does not reach temperatures close to the freezing point of the cold heat transfer liquid, freezing of the first heat exchanger is avoided.

User settings can, if needed, change the desired delta temperature on cold heat transfer liquid side to be reached, lowering the flow and thus lowering effect outtake on cold heat transfer liquid, but the control will always step into case II mentioned above, as lower temperatures on the refrigerant is reached, in order to prevent freezing.

Above calculations and measurements ensure delta temperatures, while avoiding freezing of evaporator, and requires a certain flow on the cold heat transfer liquid. This is ascertained by a flow switch mounted on the inlet of the cold heat transfer liquid.

At every start up of the heat pump, the flow switch as well as the reversing valve controlling the cold heat transfer liquid flow through either of the heat exchangers, is checked.

BRIEF DESCRIPTION OF THE FIGURES

    Fig. 1 is a sketch showing a system with heat pimp and valve unit according to the invention, and in which the method according to the invention may be performed, the system working in a heating mode of operation,
    Fig. 2 is a sketch showing the system with heat pimp and valve unit according to the invention, and in which the method according to the invention may be performed, the system working in a passive cooling mode of operation, and

Fig. 3 is a graph showing the relation between signal transmitted from a heat pump controller to the control valve unit and flow of cold heat transfer liquid from a cold thermal energy source to a first heat exchanger of the heat pump.

DETAILED DESCRIPTION OF THE INVENTION

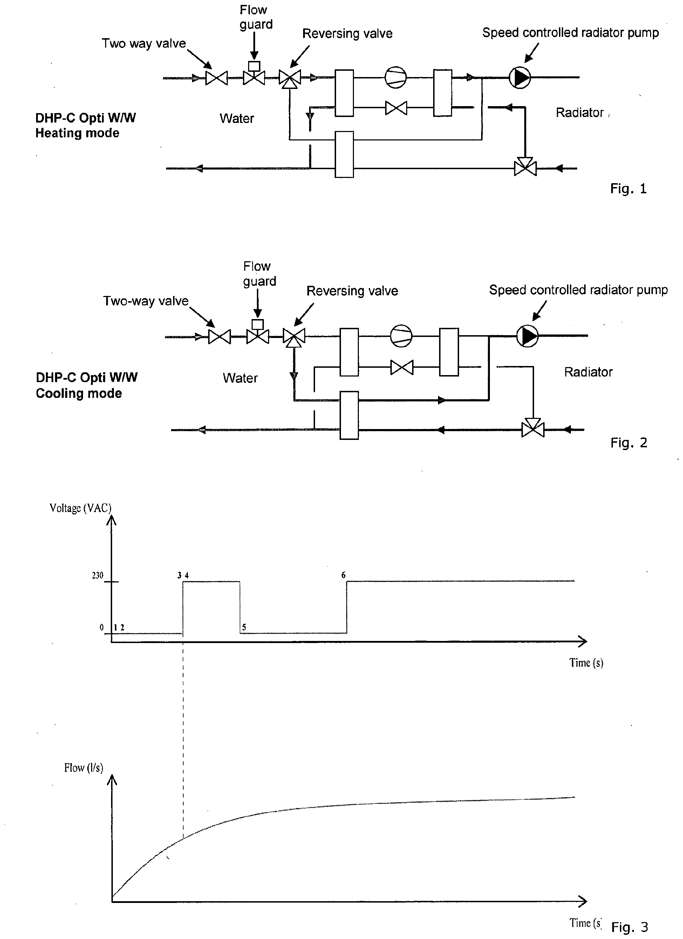

Fig. 1 and Fig. 2 are sketches of a system with a heat pump and valve unit according to the invention and capable of operating by a method according to the invention.

The system comprises a cold heat transfer liquid circuit with a circuit, which in a heating mode of operation of the heat pump is leading from a cold liquid source to a first heat exchanger of the heat pump, and said circuit leading from the first heat exchanger of the heat pump and back to the cold liquid source. In a passive cooling mode of operation, the circuit is leading from the cold liquid source to a first heat exchanger of the heat pump, and said circuit leading from the third heat exchanger of the heat pump and back to the cold liquid source.

The system also comprises a warm heat transfer liquid circuit with a circuit, which in a heating mode of operation is leading from a second heat exchanger to heat exchanging elements, such as radiators within an enclosure, such as a building, and said circuit leading from the heat exchanging elements back to second heat exchanger of the heat pump. In a passive cooling mode of operation, the circuit is leading from the third heat exchanger to heat exchanging elements, such as radiators within an enclosure, such as a building, and said circuit leading from the heat exchanging elements, such as radiators within an enclosure, such as a building, to the third heat exchanger of the heat pump.

Between the first heat exchanger and the second heat exchanger, an intermediate heat transfer circuit is provided. The intermediate heat transfer circuit comprises a compressor and an expansion valve. Heat transfer refrigerant in the intermediate circuit is wholly or partly liquefied, when having been expanded through the expansion valve, and has an evaporation temperature below a temperature of the cold heat transfer liquid in the first heat exchanger. The heat transfer refrigerant in the intermediate circuit is wholly or partly vaporized, when having been compressed by the compressor, has a condensate temperature above a desired temperature of the warm heat transfer liquid in the second heat exchanger.

A preferred embodiment of the system operates in the following manner:
The reversing valve is controlled by a 230V AC signal from a heat pump controller (not shown), switching the valve to two different positions. The reversing valve has a built in circuit which controls a closed/open-loop signal to be passed through. The loop is only closed, when the reversing valve reaches its new endpoint position. If the controller changes the 230V AC signal, thus forcing it to a new position, the loop will break and close, when its new end position is reached. This ensures that the reversing valve is in its correct position.

The flow switch works in a similar manner, with a closed/open-loop function. When the flow is met, the flow switch will close its loop letting a control signal through.

At every start-up, the two way valve is forced open and the reversing valve is forced to the non-desired position. A control signal is subsequently sent through the open/closed loop through first the flow switch and then through the reversing valve and back to the heat pump controller.

By checking this signal in steps described below and shown in Fig. 3, enough flow is obtained and the reversing valve will be in the correct position. The numbering in Fig. 3 relates to the following steps of operation of the two-way valve.

1. Two way valve is forced fully open
2. Reversing valve is forced to non-desired position
3. Await control signal loop closed
4. Switch reversing valve to desired position
5. Await control signal loop is open
6. Await control signal loop is closed

**Claims**

1. A method of operating a heat pump, said heat pump comprising:

   - a warm liquid conduit for flow of warm heat transfer liquid though the conduit at a first temperature, said heat transfer liquid intended for heating of heat radiating elements in an enclosure, such as a building;
   - a cold liquid conduit for flow of cold heat transfer liquid from a cold thermal energy source and through the conduit at a second temperature, said second temperature being lower than the first temperature; and
   - a first heat exchanger with a first fluid circuit thermally coupled to the cold liquid conduit and for extracting thermal energy from the cold liquid to the first heat exchanger, and
   - a second heat exchanger with a second fluid conduit thermally coupled to the warm liquid conduit and for supplying thermal energy from the second heat exchanger to the warm liquid, and
   - an intermediate fluid conduit for flow of an intermediate heat transfer fluid between the first heat exchanger and the second heat exchanger said intermediate heat transfer fluid transferring thermal energy from the first heat exchanger to the second heat exchanger, and said intermediate fluid conduit comprising a compressor and an expansion valve between the heat exchangers,

- a valve unit comprising at least one control valve in connection with the inlet of cold liquid circuit, said at least one control valve being a two-way valve for controlling the flow of the cold liquid, said two-way valve being positioned between a cold thermal energy source and the inlet of the first heat exchanger, and said valve unit comprising a sensor coupled to a heat pump controller controlling one or more operating parameters of the heat pump,

- said controller monitoring the second temperature at a location between, and including, the inlet and the outlet of the first heat exchanger, and

- said controller transmitting a signal to the valve unit at least when the temperature of the cold liquid is below a threshold temperature, and

- said valve unit starting to increase the opening degree of the control valve when having received the signal from the controller,

**characterized in that**

- said controller transmitting the signal to the valve unit as long as the temperature of the cold liquid is below the threshold temperature, and

- said valve unit continuously increasing the opening degree of the control valve as long as the valve unit is receiving the signal from the heat pump controller.

2. A method according to claim 1,

- said controller not transmitting a signal to the valve unit when the temperature of the cold liquid is above a threshold temperature, and

- said valve unit not increasing the opening degree of the control valve when not receiving a signal from the heat pump controller.

3. A method according to any of claims 1-2,

- said controller initially transmitting one signal to the valve unit when the temperature of the cold liquid is below the threshold temperature, and

- said controller subsequently transmitting another signal to the valve unit, when the temperature of the cold liquid is above the threshold temperature,

- said valve unit starting to increase the opening degree of the control valve when having received the one signal from the heat pump controller, and

- said valve unit stopping to increase the opening degree of the control valve when receiving the other signal from the heat pump controller.

4. A method according to any of claims 1-3, said threshold temperature being a difference between a minimum allowed temperature of the cold liquid at the inlet of the first heat exchanger and a current absolute temperature of the cold liquid.

5. A method according to any of claims 1-3, said threshold temperature being a minimum allowed temperature of the cold liquid at the inlet of the first heat exchanger or at a selected position within the first heat exchanger.

6. A method according to any of claims 1-5, said threshold temperature being 5 degrees Celsius or higher.

7. A method according to any of claims 1-6, said signal from the heat pump controller being an addition of the temperature threshold value multiplied by a constant to a previous signal from the heat pump controller.

8. A method according to claim 7, said previous signal from the heat pump controller being a signal from when the temperature of the cold liquid was below the threshold temperature.

9. A method according to claim 7 or 8, said constant being dependent on at least one of the following parameters: valve unit characteristics such as valve flow coefficient, maximum and/or minimum heat pump cooling capacity, and an allowable temperature of the cold liquid at the inlet of the first heat exchanger.

10. A heat pump for heating of heat radiating elements in an enclosure, such as a building, said heat pump comprising:

- a warm liquid conduit for flow of warm heat transfer liquid though the conduit at a first temperature, said heat transfer liquid intended for heating of heat radiating elements in an enclosure, such as a building;

- a cold liquid conduit for flow of cold heat transfer liquid from a cold thermal energy source and through the conduit at a second temperature, said second temperature being lower than the first temperature;

- a first heat exchanger with a first fluid circuit thermally coupled to the cold liquid conduit and for extracting thermal energy from the cold liquid to the first heat exchanger;

- a second heat exchanger with a second fluid conduit thermally coupled to the warm liquid conduit and for supplying thermal energy from the second heat exchanger to the warm liquid;
- an intermediate fluid conduit for flow of an intermediate heat transfer fluid between the first heat exchanger and the second heat exchanger said intermediate heat transfer fluid transferring thermal energy from the first heat exchanger to the second heat exchanger, and said intermediate fluid conduit comprising a compressor and an expansion valve between the heat exchangers;
- a heat pump controller for controlling one or more operating parameters of the heat pump;
- a valve unit comprising at least one control valve in connection with the inlet of cold liquid circuit, said at least one control valve being a two-way valve for controlling the flow of the cold liquid, said two-way valve being positioned between a cold thermal energy source and the inlet of the first heat exchanger, and said valve unit comprising a sensor coupled to said heat pump controller,

**characterized in that** said heat pump controller is configured to perform at least a mode of operation according to a method of any of claims 1-9.

11. A heat pump according to claim 10,

- said heat pump having a third heat exchanger with a first fluid circuit thermally coupled to the cold liquid conduit and for extracting thermal energy from the heat exchanger to the cold liquid, and
- said third heat exchanger having another fluid circuit thermally coupled to the warm liquid conduit and for supplying thermal energy from the warm liquid to the heat exchanger.

12. A heat pump according to claim 11,

- said heat pump having a reverse valve positioned between the cold thermal energy source and an inlet of the first heat exchanger, said reverse valve having an inlet of cold liquid from the cold thermal energy source and having two outlets,
- one outlet allowing cold liquid to the inlet of the first heat exchanger and another outlet allowing cold liquid to an inlet of the third heat exchanger,
- said second outlet of the reverse valve being closed, when the first outlet is open, and said first outlet being closed when the second outlet is open.

**Patentansprüche**

1. Verfahren zum Betrieb einer Wärmepumpe, wobei die Wärmepumpe umfasst:

- eine Warmflüssigkeitsleitung für den Fluss einer warmen Wärmeübertragungsflüssigkeit durch die Leitung mit einer ersten Temperatur, wobei die Wärmeübertragungsflüssigkeit zum Erwärmen von Wärmeabstrahlelementen in einer Hülle, wie einem Gebäude, vorgesehen ist;
- eine Kaltflüssigkeitsleitung für den Fluss einer kalten Wärmeübertragungsflüssigkeit von einer kalten thermischen Energiequelle und durch die Leitung mit einer zweiten Temperatur, wobei die zweite Temperatur niedriger als die erste Temperatur ist; und
- einen ersten Wärmetauscher mit einem ersten Fluidkreislauf, der mit der Kaltflüssigkeitsleitung thermisch gekoppelt ist und zum Abführen von thermischer Energie von der kalten Flüssigkeit zum ersten Wärmetauscher, und
- einen zweiten Wärmetauscher mit einer zweiten Fluidleitung, die mit der Warmflüssigkeitsleitung thermisch gekoppelt ist und zum Zuführen von thermischer Energie vom zweiten Wärmetauscher zur warmen Flüssigkeit, und
- eine Zwischenfluidleitung für den Fluss eines Zwischenwärmeübertragungsfluids zwischen dem ersten Wärmetauscher und dem zweiten Wärmetauscher, wobei das Zwischenwärmeübertragungsfluid thermische Energie vom ersten Wärmetauscher zum zweiten Wärmetauscher überträgt und die Zwischenfluidleitung einen Verdichter und ein Expansionsventil zwischen den Wärmetauschern umfasst,
- eine Ventileinheit, die mindestens ein mit dem Einlass des Kaltflüssigkeitkreislaufs verbundenes Stellventil umfasst, wobei das mindestens eine Stellventil ein Zweiwegeventil zum Steuern des Flusses der kalten Flüssigkeit ist, wobei das Zweiwegeventil zwischen einer kalten thermischen Energiequelle und dem Einlass des ersten Wärmetauschers positioniert ist, und wobei die Ventileinheit einen Sensor umfasst, der mit einer Wärmepumpensteuerung verbunden ist, die einen oder mehrere Betriebsparameter der Wärmepumpe steuert,
- wobei die Steuerung die zweite Temperatur an einer Stelle zwischen, einschließlich, dem Einlass und dem Auslass des ersten Wärmetauschers überwacht, und
- wobei die Steuerung zumindest dann ein Signal an die Ventileinheit sendet, wenn die Temperatur der kalten Flüssigkeit unter einer Schwellentemperatur liegt, und
- wobei die Ventileinheit beginnt, den Öffnungsgrad des Stellventils zu erhöhen, wenn sie das Signal von der Steuerung empfangen hat, **dadurch gekennzeichnet, dass**

- die Steuerung das Signal an die Ventileinheit sendet, solange die Temperatur der kalten Flüssigkeit unter der Schwellentemperatur liegt, und
- die Ventileinheit den Öffnungsgrad des Stellventils kontinuierlich erhöht, solange die Ventileinheit das Signal von der Wärmepumpensteuerung empfängt.

2. Verfahren nach Anspruch 1,

- wobei die Steuerung kein Signal an die Ventileinheit sendet, wenn die Temperatur der kalten Flüssigkeit über einer Schwellentemperatur liegt, und
- wobei die Ventileinheit den Öffnungsgrad des Stellventils nicht erhöht, wenn sie kein Signal von der Wärmepumpensteuerung empfängt.

3. Verfahren nach einem der Ansprüche 1 bis 2,

- wobei die Steuerung anfangs ein Signal an die Ventileinheit sendet, wenn die Temperatur der kalten Flüssigkeit unter der Schwellentemperatur liegt, und
- wobei die Steuerung anschließend ein anderes Signal an die Ventileinheit sendet, wenn die Temperatur der kalten Flüssigkeit über der Schwellentemperatur liegt,
- wobei die Ventileinheit beginnt, den Öffnungsgrad des Stellventils zu erhöhen, wenn sie das eine Signal von der Wärmepumpensteuerung empfangen hat, und
- wobei die Ventileinheit aufhört, den Öffnungsgrad des Stellventils zu erhöhen, wenn sie das andere Signal von der Wärmepumpensteuerung empfängt.

4. Verfahren nach einem der Ansprüche 1 bis 3, wobei die Schwellentemperatur eine Differenz zwischen einer zulässigen Mindesttemperatur der kalten Flüssigkeit am Einlass des ersten Wärmetauschers und einer momentanen absoluten Temperatur der kalten Flüssigkeit ist.

5. Verfahren nach einem der Ansprüche 1 bis 3, wobei die Schwellentemperatur eine zulässige Mindesttemperatur der kalten Flüssigkeit am Einlass des ersten Wärmetauschers oder an einer ausgewählten Stelle im ersten Wärmetauscher ist.

6. Verfahren nach einem der Ansprüche 1 bis 5, wobei die Schwellentemperatur 5 Grad Celsius oder mehr beträgt.

7. Verfahren nach einem der Ansprüche 1 bis 6, wobei das Signal von der Wärmepumpensteuerung eine Addition des mit einer Konstanten multiplizierten Temperatur-Schwellenwerts zu einem vorherigen Signal von der Wärmepumpensteuerung ist.

8. Verfahren nach Anspruch 7, wobei das vorherige Signal von der Wärmepumpensteuerung ein Signal ab dann ist, wenn die Temperatur der kalten Flüssigkeit unter der Schwellentemperatur lag.

9. Verfahren nach Anspruch 7 oder 8, wobei die Konstante von mindestens einem der folgenden Parameter abhängt: Eigenschaften der Ventileinheit wie Ventildurchflusskoeffizient, maximale und/oder minimale Kühlleistung der Wärmepumpe und eine zulässige Temperatur der kalten Flüssigkeit am Einlass des ersten Wärmetauschers.

10. Wärmepumpe zum Erwärmen von Wärmeabstrahlelementen in einer Hülle, wie einem Gebäude, wobei die Wärmepumpe umfasst:

- eine Warmflüssigkeitsleitung für den Fluss einer warmen Wärmeübertragungsflüssigkeit durch die Leitung mit einer ersten Temperatur, wobei die Wärmeübertragungsflüssigkeit zum Erwärmen von Wärmeabstrahlelementen in einer Hülle, wie einem Gebäude, vorgesehen ist;
- eine Kaltflüssigkeitsleitung für den Fluss einer kalten Wärmeübertragungsflüssigkeit von einer kalten thermischen Energiequelle und durch die Leitung mit einer zweiten Temperatur, wobei die zweite Temperatur niedriger als die erste Temperatur ist;
- einen ersten Wärmetauscher mit einem ersten Fluidkreislauf, der mit der Kaltflüssigkeitsleitung thermisch gekoppelt ist und zum Abführen von thermischer Energie von der kalten Flüssigkeit zum ersten Wärmetauscher;
- einen zweiten Wärmetauscher mit einer zweiten Fluidleitung, die mit der Warmflüssigkeitsleitung thermisch gekoppelt ist und zum Zuführen von thermischer Energie vom zweiten Wärmetauscher zur warmen Flüssigkeit;
- eine Zwischenfluidleitung für den Fluss eines Zwischenwärmeübertragungsfluids zwischen dem ersten Wärmetauscher und dem zweiten Wärmetauscher, wobei das Zwischenwärmeübertragungsfluid thermische Energie vom ersten Wärmetauscher zum zweiten Wärmetauscher überträgt und die Zwischenfluidleitung einen Verdichter und ein Expansionsventil zwischen den Wärmetauschern umfasst;
- eine Wärmepumpensteuerung zum Steuern eines oder mehrerer Betriebsparameter der Wärmepumpe;
- eine Ventileinheit, die mindestens ein mit dem Einlass des Kaltflüssigkeitkreislaufs verbundenes Stellventil umfasst, wobei das mindestens eine Stellventil ein Zweiwegeventil zum Steuern des Flusses der kalten Flüssigkeit ist, wobei das Zweiwegeventil zwischen einer kalten thermischen Energiequelle und dem Einlass des ersten Wärmetauschers positioniert ist, und wobei die Ventileinheit einen Sensor umfasst, der mit der Wärmepumpensteuerung verbunden ist,

**dadurch gekennzeichnet, dass** die Wärmepumpensteuerung dazu eingerichtet ist, zumindest einen Betriebsmodus gemäß einem Verfahren nach einem der Ansprüche 1 bis 9 durchzuführen.

**11.** Wärmepumpe nach Anspruch 10,

- wobei die Wärmepumpe einen dritten Wärmetauscher mit einem ersten Fluidkreislauf aufweist, der thermisch mit der Kaltflüssigkeitsleitung gekoppelt ist und zum Abführen von thermischer Energie von dem Wärmetauscher zur kalten Flüssigkeit, und
- wobei der dritte Wärmetauscher einen anderen Fluidkreislauf aufweist, der thermisch mit der Warmflüssigkeitsleitung gekoppelt ist und zum Zuführen von thermischer Energie von der warmen Flüssigkeit zum Wärmetauscher.

**12.** Wärmepumpe nach Anspruch 11,

- wobei die Wärmepumpe ein Umsteuerventil aufweist, das zwischen der kalten thermischen Energiequelle und einem Einlass des ersten Wärmetauschers positioniert ist, wobei das Umsteuerventil einen Einlass für kalte Flüssigkeit von der kalten thermischen Energiequelle aufweist und zwei Auslässe hat,
- wobei ein Auslass kalte Flüssigkeit zum Einlass des ersten Wärmetauschers zulässt und ein anderer Auslass kalte Flüssigkeit zu einem Einlass des dritten Wärmetauschers zulässt,
- wobei der zweite Auslass des Umsteuerventils geschlossen ist, wenn der erste Auslass geöffnet ist, und wobei der erste Auslass geschlossen ist, wenn der zweite Auslass geöffnet ist.

**Revendications**

**1.** Procédé de fonctionnement d'une pompe à chaleur, ladite pompe à chaleur comprenant :

- un conduit de liquide chaud pour un écoulement de liquide de transfert thermique chaud à travers le conduit à une première température, ledit liquide de transfert thermique prévu pour le chauffage d'éléments de rayonnement de chaleur dans une enceinte, telle qu'un bâtiment ;

- un conduit de liquide froid pour un écoulement de liquide de transfert thermique froid depuis une source d'énergie thermique froide et à travers le conduit à une deuxième température, ladite deuxième température étant inférieure à la première température ; et
- un premier échangeur thermique avec un premier circuit de fluide couplé thermiquement au conduit de liquide froid et pour extraire de l'énergie thermique depuis le liquide froid vers le premier échangeur thermique, et
- un deuxième échangeur thermique avec un deuxième conduit de fluide couplé thermiquement au conduit de liquide chaud et pour amener de l'énergie thermique depuis le deuxième échangeur thermique vers le liquide chaud, et
- un conduit de fluide intermédiaire pour un écoulement de fluide de transfert thermique intermédiaire entre le premier échangeur thermique et le deuxième échangeur thermique ledit fluide de transfert thermique intermédiaire transférant de l'énergie thermique depuis le premier échangeur thermique vers le deuxième échangeur thermique, et ledit conduit de fluide intermédiaire comprenant un compresseur et un détendeur entre les échangeurs thermiques,
- une unité de vanne comprenant au moins une vanne de commande en liaison avec l'entrée du circuit de liquide froid, ladite au moins une vanne de commande étant une vanne à deux voies pour commander l'écoulement du liquide froid, ladite vanne à deux voies étant positionnée entre une source d'énergie thermique froide et l'entrée du premier échangeur thermique, et ladite unité de vanne comprenant un capteur couplé à un dispositif de commande de pompe à chaleur commandant un ou plusieurs paramètres opérationnels de la pompe à chaleur,
- ledit dispositif de commande surveillant la deuxième température à un emplacement entre, et incluant, l'entrée et la sortie du premier échangeur thermique, et
- ledit dispositif de commande transmettant un signal à l'unité de vanne au moins lorsque la température du liquide froid est inférieure à une température seuil, et
- ladite unité de vanne commençant à augmenter le degré d'ouverture de la vanne de commande lorsqu'elle a reçu le signal provenant du dispositif de commande,
**caractérisé en ce que**
- ledit dispositif de commande transmet le signal à l'unité de vanne tant que la température du liquide froid est inférieure à la température seuil, et
- ladite unité de vanne augmente de façon continue le degré d'ouverture de la vanne de commande tant que l'unité de vanne reçoit le signal provenant du dispositif de commande de pompe à chaleur.

2. Procédé selon la revendication 1,

   - ledit dispositif de commande ne transmettant pas le signal à l'unité de vanne lorsque la température du liquide froid est supérieure à une température seuil, et
   - ladite unité de vanne n'augmentant pas le degré d'ouverture de la vanne de commande lorsqu'elle ne reçoit pas de signal provenant du dispositif de commande de pompe à chaleur.

3. Procédé selon l'une quelconque des revendications 1 ou 2,

   - ledit dispositif de commande transmettant initialement un signal à l'unité de vanne lorsque la température du liquide froid est inférieure à la température seuil, et
   - ledit dispositif de commande transmettant ensuite un autre signal à l'unité de vanne, lorsque la température du liquide froid est supérieure à la température seuil,
   - ladite unité de vanne commençant à augmenter le degré d'ouverture de la vanne de commande lorsqu'elle a reçu ce signal provenant du dispositif de commande de pompe à chaleur, et
   - ladite unité de vanne arrêtant d'augmenter le degré d'ouverture de la vanne de commande lorsqu'elle reçoit l'autre signal provenant du dispositif de commande de pompe à chaleur.

4. Procédé selon l'une quelconque des revendications 1 à 3, ladite température seuil étant une différence entre une température minimale autorisée du liquide froid à l'entrée du premier échangeur thermique et une température absolue actuelle du liquide froid.

5. Procédé selon l'une quelconque des revendications 1 à 3, ladite température seuil étant une température minimale autorisée du liquide froid à l'entrée du premier échangeur thermique ou à une position sélectionnée au sein du premier échangeur thermique.

6. Procédé selon l'une quelconque des revendications 1 à 5, ladite température seuil étant de 5 degrés Celsius ou plus.

7. Procédé selon l'une quelconque des revendications 1 à 6, ledit signal provenant du dispositif de commande de pompe à chaleur étant une addition de la valeur seuil de température multipliée par une constante à un signal précédent provenant du dispositif de commande de pompe à chaleur.

8. Procédé selon la revendication 7, ledit signal précédent provenant du dispositif de commande de pompe à chaleur étant un signal provenant du moment où la température du liquide froid était en dessous de la température seuil.

9. Procédé selon la revendication 7 ou 8, ladite constante étant dépendante d'au moins l'un des paramètres suivants : des caractéristiques d'unité de vanne telles qu'un coefficient de débit de vanne, une capacité maximale et/ou minimale de refroidissement de la pompe à chaleur, et une température admissible du liquide froid à l'entrée du premier échangeur thermique.

10. Pompe à chaleur pour le chauffage d'éléments de rayonnement de chaleur dans une enceinte, telle qu'un bâtiment, ladite pompe à chaleur comprenant :

   - un conduit de liquide chaud pour un écoulement de liquide de transfert thermique chaud à travers le conduit à une première température, ledit liquide de transfert thermique prévu pour le chauffage d'éléments de rayonnement de chaleur dans une enceinte, telle qu'un bâtiment ;
   - un conduit de liquide froid pour un écoulement de liquide de transfert thermique froid depuis une source d'énergie thermique froide et à travers le conduit à une deuxième température, ladite deuxième température étant inférieure à la première température ;
   - un premier échangeur thermique avec un premier circuit de fluide couplé thermiquement au conduit de liquide froid et pour extraire de l'énergie thermique depuis le liquide froid vers le premier échangeur thermique ;
   - un deuxième échangeur thermique avec un deuxième conduit de fluide couplé thermiquement au conduit de liquide chaud et pour amener de l'énergie thermique depuis le deuxième échangeur thermique vers le liquide chaud ;
   - un conduit de fluide intermédiaire pour un écoulement de fluide de transfert thermique intermédiaire entre le premier échangeur thermique et le deuxième échangeur thermique ledit fluide de transfert thermique intermédiaire transférant de l'énergie thermique depuis le premier échangeur thermique vers le deuxième échangeur thermique, et ledit conduit de fluide intermédiaire comprenant un compresseur et un détendeur entre les échangeurs thermiques ;
   - un dispositif de commande de pompe à chaleur pour commander un ou plusieurs paramètres opérationnels de la pompe à chaleur ;
   - une unité de vanne comprenant au moins une vanne de commande en liaison avec l'admission du circuit de liquide froid, ladite au moins une vanne de commande étant une vanne à deux voies pour commander l'écoulement du liquide froid, ladite vanne à deux voies étant positionnée entre une source d'énergie thermique froide et l'entrée du premier échangeur thermique, et ladite unité de vanne comprenant un capteur couplé audit dispositif de commande de pompe à chaleur, **caractérisé en ce que** ledit dispositif de commande de pompe à chaleur est configuré pour mettre en œuvre au moins un mode de fonctionnement selon un procédé de l'une quelconque des revendications 1 à 9.

11. Pompe à chaleur selon la revendication 10,

- ladite pompe à chaleur ayant un troisième échangeur thermique avec un premier circuit de fluide couplé thermiquement au conduit de liquide froid et pour extraire de l'énergie thermique depuis l'échangeur thermique vers le liquide froid, et
- ledit troisième échangeur thermique ayant un autre circuit de fluide couplé thermiquement au conduit de liquide chaud et pour amener de l'énergie thermique depuis le liquide chaud vers l'échangeur thermique.

12. Pompe à chaleur selon la revendication 11,

- ladite pompe à chaleur ayant une vanne d'inversion positionnée entre la source d'énergie thermique froide et une entrée du premier échangeur thermique, ladite vanne d'inversion ayant une entrée de liquide froid depuis la source d'énergie thermique froide et ayant deux sorties,
- une sortie autorisant un liquide froid vers l'entrée du premier échangeur thermique et une autre sortie autorisant un liquide froid vers une entrée du troisième échangeur thermique,
- ladite deuxième sortie de la vanne d'inversion étant fermée, lorsque la première sortie est ouverte, et ladite première sortie étant fermée lorsque la deuxième sortie est ouverte.

Flow
guard

Two way valve         Reversing valve          Speed controlled radiator pump

DHP-C Opti W/W          Water                                        Radiator
Heating mode

Fig. 1

Flow
guard

Two-way valve          Reversing valve          Speed controlled radiator pump

DHP-C Opti W/W          Water                                        Radiator
Cooling mode

Fig. 2

Voltage (VAC)

230          3 4                    6

0    1 2              5

Time (s)

Flow (l/s)

Time (s)    Fig. 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005344953 A
- US 20100108290 A1